# EUROPÄISCHE PATENTSCHRIFT

(11) **EP 0 571 435 B1**
(45) Veröffentlichungstag und Bekanntmachung des Hinweises auf die Patenterteilung: **23.10.1996**
(21) Anmeldenummer: 92904157.2
(22) Anmeldetag: 17.02.1992
(51) Int. Cl.: C08J 9/06, H01F 27/32

(54) **ISOLIERTE WICKLUNG SOWIE VERFAHREN UND HALBFABRIKAT ZU IHRER HERSTELLUNG**
INSULATED WINDING, PROCESS FOR PRODUCING IT, AND SEMI-FINISHED PRODUCT USED IN THE PRODUCTION PROCESS
ENROULEMENT ISOLE, AINSI QUE PROCEDE ET DEMI-PRODUIT POUR SA FABRICATION

(30) Priorität: 17.02.1991 DE 4104868
(43) Veröffentlichungstag der Anmeldung: 01.12.1993
(73) Patentinhaber: MODERNE MASCHINEN-APPARATE-WERKZEUGE AG, CH-8750 Glarus (CH)
(72) Erfinder: DOROSCHENKO, Viktor, Minsk, 220600 (RU); PREU, Hans, D-7022 Leinfelden (DE)
(74) Vertreter: Ostertag, Reinhard
(86) Internationale Anmeldenummer: EP9200327
(87) Internationale Veröffentlichungsnummer: WO9214778

(56) Entgegenhaltungen:
- EP-A- 0 223 085
- CH-A- 277 791

## Beschreibung

Die Erfindung betrifft eine isolierte Wicklung gemäß dem Oberbegriff des Anspruches 1 sowie ein Verfahren und ein Halbfabrikat zu ihrer Herstellung.

Isolierte Wicklungen finden in unterschiedlicher, meistens ringförmiger oder spulenförmiger Geometrie unterschiedlichste Verwendung in Transformatoren, Magneten, Wandlern, Lautsprechern usw. Für viele Einsatzzwecke wird gefordert, daß die Wicklungen auch schnellen Temperaturänderungen, hoher Feuchtigkeit und chemisch aggressiven Medien widerstehen, wie sie z.B. in der in Industrieanlagen angetroffenen verunreinigten Luft enthalten sind.

Bei bekannten derartigen Wicklungen stellt man die Isolierung so her, daß man die Leiterlagen mit einem Harz unter gleichzeitiger Unterdruckbeaufschlagung tränkt, gegebenenfalls spachtelt, mit einer Oberflächenumhüllung versieht und in einer Form abgießt. Diese Art der Herstellung erfordert verschiedene Trockenvorgänge bei hohen Temperaturen. Die verwendeten Harze, Spachtel usw. sind gesundheitsschädlich, und das fertige Produkt muß oft mechanisch nachbearbeitet werden, um Perlen und Grate zu entfernen. Zum Schutz von Anschlußfahnen und dergleichen müssen Schutzmaßnahmen getroffen werden.

Weicht man von diesem an sich bewährten Herstellungsverfahren ab, verwendet z.B. preiswertere Materialien, die stärker hygroskopisch sind oder arbeitet man in Räumen mit hoher Luftfeuchtigkeit oder achtet man nicht auf exakte Dosierung der verschiedenen Komponenten, so erhält man Wicklungen, die den hohen Qualitätsanforderungen nicht genügen. Außerdem besteht bei derartigen bekannten isolierten Wicklungen bei extremen thermischen Belastungen nach wie vor das Problem von Spannungsbrüchen in der Isolierschicht bei starken Temperaturänderungen, da die Isolierschicht verhältnismäßig spröde ist und einen von dem eingebetteten elektrischen Drahtmaterial stark unterschiedlichen thermischen Ausdehnungskoeffizienten hat.

Durch die vorliegende Erfindung soll eine isolierte Wicklung gemäß dem Oberbegriff des Anspruches 1 geschaffen werden, bei der die Isolierschicht auch nach starken Temperaturänderungen eine zuverlässig mit den Leiterlagen verbundene monolithische Matrix bildet.

Diese Aufgabe ist erfindungsgemäß gelöst durch eine Wicklung gemäß Anspruch 1.

Bei der erfindungsgemäßen elektrischen Wicklung hat die Isolierschicht noch eine gewisse Elastizität und kann so thermisch bedingten Abmessungsänderungen der Leiterlagen auch für eine große Anzahl von Temperaturspielen großen Hubes zerstörungsfrei folgen. Dabei läßt sich die Wicklung preisgünstig und in einem verhältnismäßig unkritischen Arbeitsverfahren herstellen, bei welchem keine gesundheitsschädlichen Dämpfe freigesetzt werden.

Erfindungsgemäße Wicklungen sind bei mäßiger Überhitzung selbstheilend, da das Polyolefin nur schmilzt, bei anschließendem Erkalten aber wieder eine monolithische isolierende Matrix bildet.

Erfindungsgemäße Wicklungen sind frei von Hohlräumen, und es kann keine Feuchtigkeit in sie eindringen.

Vorteilhafte Weiterbildungen der Erfindung sind in Unteransprüchen angegeben.

Mit der Weiterbildung der Erfindung gemäß Anspruch 2 wird erreicht, daß das Polyolefinmaterial auch in zwischen den einzelnen Leitern der Leiterlage verbleibende Zwischenräume eindringen kann. Man erhält somit eine besonders große Berührfläche zwischen Isolierschicht und Leiterlagen.

Die Weiterbildung der Erfindung gemäß Anspruch 3 ist im Hinblick auf eine Langzeiterhaltung der elastischen Eigenschaften der Isolierschicht von Vorteil.

Mit der Weiterbildung der Erfindung gemäß Anspruch 5 erhält man eine undurchlässige Abdeckung der Isolierschicht, die ein Eindringen von Fremdstoffen aus der Umgebungsatmosphäre verhindert und somit die Langzeitbeständigkeit der Wicklung nochmals verbessert.

Bei dem im Anspruch 6 angegebenen Verfahren hält man die Bildung der monolithischen Isolierschicht um die Leiterlagen herum auf verfahrenstechnisch besonders einfache und keine hohen Kontrollanforderungen stellende Weise.

Mit der Weiterbildung der Erfindung gemäß Anspruch 9 läßt sich das Anbringen des Isolierschichtmateriales an den Leiterlagen einfach erledigen, da das Isolierschichtmaterial als handhabbares gestrecktes oder flächenförmiges Gebilde vorliegt. Diese Gebilde können leicht maschinell in die in Entstehung begriffene Wicklung eingelegt werden.

Mit der Weiterbildung der Erfindung gemäß Anspruch 10 wird ein Eindringen des Isolierschichtmateriales in die zwischen den einzelnen Leitern liegenden Zwischenräume begünstigt.

Dabei stellt die Weiterbildung des Verfahrens gemäß Anspruch 12 sicher, daß das Aufschäumen nach innen in Richtung auf die Leiter stattfindet.

Auch die Weiterbildung des Verfahrens gemäß Anspruch 13 dient einem guten Ausfüllen der Zwischenräume zwischen den einzelnen Leitern der Wicklung.

Die im Anspruch 14 angegebenen Halbfabrikate werden in der Fabrik hergestellt und können auch für Kleinserien leicht vom Fachmann eingesetzt werden: Bänder und Drähte können zwischen Wicklungslagen gewickelt werden, Folienstücke können auch anstelle eines Isolierlackes über gedruckte Leiterplatten gelegt werden. Jeweils erfolgt durch eine anschließende, unkritische Wärmebehandlung in situ eine innige Verbindung mit der zu isolierenden Unterlage. Die Halbfabrikate eignen sich auch zur Herstellung von Dichtstellen in situ.

Ein Halbfabrikat gemäß Anspruch 15 zeichnet sich durch besonders gute Handhabbarkeit aus. Sowohl Reste des Halbfabrikates als auch aus ihm hergestellte Wicklungen lassen sich umweltfreundlich entsorgen.

Das im Anspruch 16 angegebene Halbfabrikat ist besonders gut durch Extrudieren herstellbar.

Ein Halbfabrikat nach Anspruch 17 zeichnet sich durch besonders hohe Durchschlagfestigkeit aus.

Mit einem Halbfabrikat gemäß Anspruch 18 lassen sich gut isolierte Wicklungen durch bloßes Wickeln eines einzigen Drahtes herstellen.

Dabei läßt sich ein Halbfabrikat gemäß Anspruch 19 auch zu kleinen Durchmesser aufweisenden Spulen ohne großen Kraftaufwand wickeln.

Die Weiterbildungen der Erfindung gemäß den Ansprüchen 20 bis 24 sind wieder im Hinblick auf chemische Langzeit-Stabilität bzw. Aufschäumen des Polyolefinmateriales bei einer Wärmebehandlung von Vorteil.

Nachstehend wird die Erfindung anhand von Ausführungsbeispielen unter Bezugnahme auf die Zeichnung näher erläutert. In dieser zeigen:
- Figur 1:: einen axialen Schnitt durch einen Wicklungsrohling zusammen mit einer gestrichelt angedeuteten Wärmebehandlungseinrichtung;
- Figur 2:: einen vergrößerten Teilschnitt durch die Umgebung der Leiterlage einer fertigen Wicklung, die aus dem Rohling nach Figur 1 hergestellt ist;
- Figur 3:: einen axialen Schnitt durch eine mehrlagige Spule;
- Figur 4:: einen Schnitt durch ein Verbund-Isolierhalbfabrikat;
- Figur 5:: einen Schnitt durch ein abgewandeltes Verbund-Isolierhalbfabrikat;
- Figur 6:: einen transversalen Schnitt durch einen isolierten Leiter mit angespritztem Isolierhalbfabrikat; und
- Figur 7:: eine seitliche Ansicht des Materiales nach Figur 6, teilweise axial geschnitten.

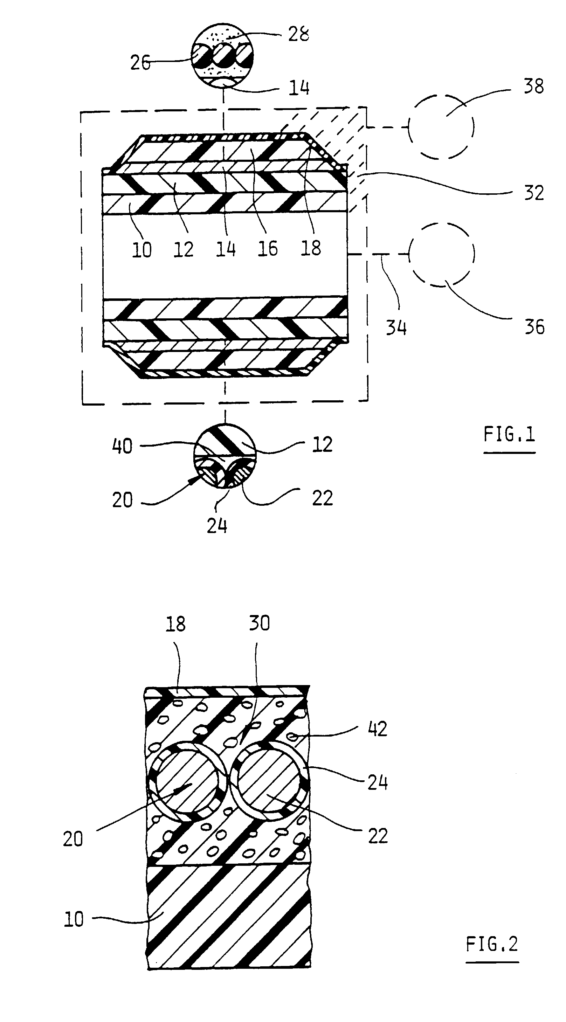

In Figur 1 ist mit 10 eine aus Kunststoff gefertigte Wickelhülse bezeichnet. Auf diese ist ein Band 12 gewickelt, welches aus noch nicht oder nur geringfügig vernetztem Polyäthylenmaterial besteht. Über dem Band 12 liegt eine Leiterlage 14, die ihrerseits durch ein weiteres Band 16 aus nicht oder nur geringfügig vernetztem Polyäthylenmaterial abgedeckt ist. Diese Schichtanordnung ist nach außen durch ein Band 18 aus Polyäthylenterephthalat abgedeckt.

Die Leiterlage 14 besteht aus einzelnen elektrischen Leitern 20, die auf Stoß einlagig gewickelt sind und jeweils eine elektrisch leitende metallische Seele 22 und eine diese umgebende emailähnliche, elektrisch isolierende Schutzschicht 24 umfassen. Die Bänder 12 und 16 bestehen jeweils aus einer Lage aus Drähten 26, die aus nicht vernetztem Polyäthylen bestehen. Diese Drahtlage ist in eine Schicht 28 eingebettet, die aus nicht vernetzten kleinen Polyäthylenpartikeln besteht. Dieses Polyäthylen-Bandmaterial kann z.B. dadurch hergestellt werden, daß man an die Drähte 26 das pulverförmige nicht vernetzte Polyäthylenmaterial gegenwalzt. Stattdessen kann man auch die Schicht 28 durch Extrudieren um die Drähte 26 herum anbringen. Wichtig ist, daß das Material der fertigen Bänder 12 und 16 noch nicht oder nur geringfügig (bis 15%) vernetzt ist.

Das Material der Schutzschicht 24 ist bei denjenigen Temperaturen, bei denen das Polyäthylenmaterial vernetzbar ist (typischerweise im Bereich von 160° C), sowohl in sich selbst als auch bezüglich des Haftens auf der metallischen Seele 22 beständig.

Das Polyäthylenmaterial enthält zumindest in der Schicht 28, vorzugsweise auch in den Drähten 26 sowohl ein Vernetzungsmittel als auch ein Antioxidans sowie ein Schäummittel.

Um aus dem Polyäthylenmaterial eine die Leiterlage 14 formschlüssig und fest umgebende monolithische Isolierschicht zu erhalten, wie sie in Figur 2 bei 30 gezeigt ist, wird der in Figur 1 gezeigte Wicklungsrohling in eine zweiteilige Form 32 gebracht. Deren Innenfläche ist komplementär zur gewünschten Außenfläche der Wicklung. Der Forminnenraum steht über eine Leitung 34 mit einer Unterdruckquelle 36 in Verbindung. Ferner ist die Form 32 an eine Heizung 38 angekoppelt.

Erhitzt man die Form 32 auf eine Temperatur von 160° C und hält man im Wicklungsrohling diese Temperatur für eine Zeitspanne von zwei Stunden ein, so schmilzt das Polyäthylenmaterial unter Aufschäumen und vernetzt. Auf diese Weise dringt das Polyäthylenmaterial zwischen die einzelnen Leiter 20 ein und füllt die dort zunächst vorhandenen Zwischenräume 40 (vgl. Figur 1) vollständig aus. Zugleich vernetzt das Polyäthylenmaterial und bildet somit eine feste, aber doch elastische monolithische Matrix, in welche die Leiter 20 nun eingebettet sind. Da die Schutzschicht 24 bei den Temperaturen beständig ist, die zum Schmelzen, Aufschäumen und Vernetzen des Polyäthylenmateriales verwendet werden, bleiben die Schutzschichten 24 der einzelnen Leiter 20 unverändert erhalten.

In Figur 2 sind die beim Aufschäumen des Polyäthylenmateriales les erhaltenen Poren mit 42 bezeichnet. Ihr Größe und Anzahl kann über die Menge des dem Polyäthylenmaterial zugegebenen Schäummittels und über den bei der Wärmebehandlung in der Form 32 eingestellten Druck vorgegegeben werden.

Nach der Wärmebehandlung des Wicklungsrohlinges ist auch das Band 18 durch Anschmelzen des Polyäthylenmateriales fest mit der Isolierschicht 30 verbunden.

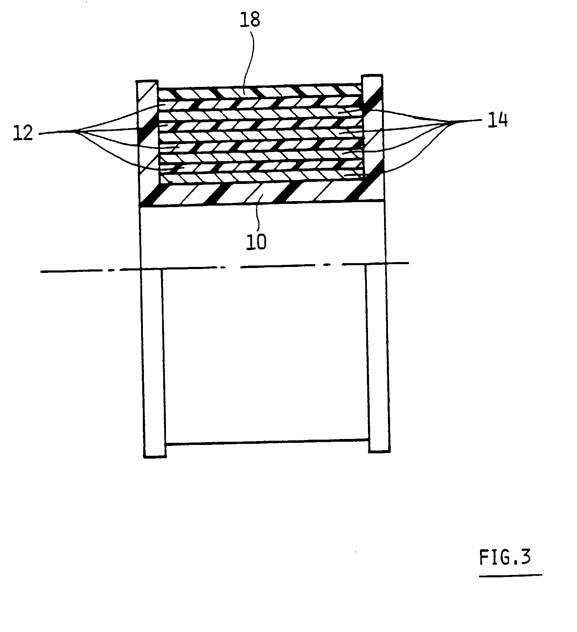

Figur 3 zeigt einen Wicklungsrohling für eine mehrlagige 5 Wicklung, wobei Teile des Rohlings analog zu Figur 1 und 2 bezeichnet sind.

Das zur Herstellung der Bänder 12 und 16 verwendete Polyäthylenmaterial besteht neben im wesentlichen unvernetztem Polyäthylen aus etwa 0,5 bis etwa 2 Gewichtsprozent Vernetzungs- und Schäummittel und etwa 0,3 bis etwa 0,5 Gewichtsprozent Antioxidans.

Als Vernetzungs- und Schäummittel kommen insbesondere organische Peroxide in Frage, als Antioxidantien insbesondere Aminverbindungen.

Beispiele für derartige Peroxide sind: Bis-(α,α-Dimethylbenzyl)-Peroxid (Dicumylperoxid); 1,3-Di-(Tertbutylperoxiisopropyl)-Benzol; 2,4-Dichlorbenzolperoxid; Komplexe organischer Peroxide mit Carbamid, z.B. Bis-(a,a-Dimethylbenzyl)-Peroxid mit Carbamid im Verhältnis etwa 1:3 bis etwa 1:10, vorzugsweise etwa 1:5; Mischungen aus Tertbutyl-Monoperoxiden der Meta-Para-Diisopropylbenzole und des 1,1,3-Trimethylinphans (Monoperoxin).

Als Antioxidantien vom Amintyp können z.B. verwendet werden: N,N'-Di-(Naphthyl-2)-Phenylendiamin-(1,4) (Diaphen HH) oder N-Nitroso-Diphenylamin (Diaphenam H). Weitere Antioxidantien sind: 4,4'-Thio-Bis(6-Tertbutyl-3-Methylphenol) (Phenosan F); 2-(3,5-Di-Tertbutyl-4-Hydroxyphenyl-Propionylhydrazino)-5-(3,5-Di-Tertbutyl-4-Hydroxyphenyläthyl)-2,3-Dihydro-1,2,3,4-Oxaphosphadiasol (Santonox® K).

Bei der Wärmebehandlung wird ein Vernetzungsgrad des Polyäthylens zwischen 60 und 95% eingestellt. Dieser kann über die mechanischen Eigenschaften des Polyäthylens einfach makroskopisch gemessen werden, z.B. über den sog. "Durchdrückwiderstand" von Proben. Bei einer Temperatur von 200°C hat man folgende Zuordnung zwischen Durchdrückwiderstand und Vernetzungsgrad:

| Durchdrückwiderstand (%) | Vernetzungsgrad (%) |
|---|---|
| 30-40 | 50 |
| 60-65 | 60 |
| 70-80 | 70 |

Nachstehend werden verschiedene Beispiele für die Zusammensetzung des Polyäthylenmateriales gegeben:

### Beispiel 1

Hochdruck-Polyäthylen wird im Diffusionsverfahren 1,0 Gew. -% Bis-(α,α-Dimethylbenzyl)-Peroxid als Vernetzungs- und Treib- oder Schaummittel und 0,4 Gew.-% N,N'-Di-(Naphthyl-2)-Phenylendiamin-(1,4) zugesetzt. Die so erhaltene Polyäthylenmasse wird bei einer Temperatur von 105-130°C zu einer Folie verarbeitet. In diesem Temperaturbereich kommt es noch zu keiner nennenswerten Vernetzung des Polyäthylens.

Diese Folie wurde um einen Wickelkern gelegt, und auf die Folie wurde eine Leiterlage aufgewickelt. Auf die Leiterlage wurde dann eine Folie aus Polyäthylenterephtalat gewickelt. Unter atmosphärischem Druck wurde dann die so erhaltene Schichtstruktur drei Stunden lang bei einer Temperatur von 160 ± 5°C gehalten. Hernach beträgt der Vernetzungsgrad der Polyäthylen-Isolierschicht mindestens 65%.

Bei der Wärmebehandlung kommt es zu einem Aufschäumen der Polyäthylenmasse und zum Füllen von Zwischenräumen in der Schichtstruktur. Man erhält insgesamt eine feinporige Isolierschicht aus vernetztem Polyäthylen. Bei der Wärmebehandlung kommt es zu starken Adhäsionsverbindungen zwischen Isolierschicht und Leiterlage, Isolierschicht und Wickelkern sowie Isolierschicht und äußerer Schutzschicht. Damit bilden die Isolierschicht und die in sie eingebettete Leiterlage eine belastungsfähige auch starken Temperaturschwankungen standhaltende monolithische Einheit.

Der Vernetzungsgrad und die elastischen Eigenschaften der fertigen Isolierschicht lassen sich über Art und Menge des Vernetzungsmittels und des gewählten Oxidationsverhinderers beeinflussen, wie aus nachstehenden Tabellen ersichtlich:

**Tabelle 1:**

| Vernetzungsgrad und relative Dehnung für eine Polyäthylen-Isolierschicht mit 0,4 Gew.-% Diaphen und 0,3-3 Gew.-% Dicumylperoxid. (Vernetzungsgrad nach dem Gehalt an Gelfraktion; relative Dehnung nach zweistündiger Belastung bei 150 ±5°C; Angaben in %) | | | | | | | | |
|---|---|---|---|---|---|---|---|---|
| Peroxid (Gew.-%) | 0,3 | 0,4 | 0,5 | 1,0 | 1,5 | 2,0 | 2,5 | 3,0 |
| Vernetzungsgrad (%) | 47 | 53 | 61 | 63 | 65 | 66 | 66 | 67 |
| relative Dehnung (%) | - | 71 | 91 | 93 | 92 | 90 | 84 | 72 |

**Tabelle 2:**

| Vernetzungsgrad und relative Dehnung für eine Polyäthylen-Isolierschicht mit 1,0 Gew.-% Dicumylperoxid und 0,1-0,7 Gew.-% Diaphen HH (Wärmebehandlung über zwei Stunden bei 160°C; Vernetzungsgrad nach dem Gehalt an Gelfraktion; relative Dehnung nach zweistündiger Belastung bei 150 ± 5°C; Angaben in %). | | | | | | | |
|---|---|---|---|---|---|---|---|
| Diaphen HH (Gew.-%) | 0,1 | 0,2 | 0,3 | 0,4 | 0,5 | 0,6 | 0,7 |
| Vernetzungsgrad (%) | 68 | 66 | 65 | 63 | 61 | 58 | 53 |
| relative Dehnung (%) | 77 | 86 | 91 | 93 | 94 | 94 | 93 |

**Tabelle 3:**

| Vernetzungsgrad für eine Polyäthylen-Isolierschicht mit 1,5 Gew.-% Peroxid für verschiedene Vernetzungsmittel und verschiedene Temperaturen (in %, nach einstündiger Wärmebehandlung bei 160°C; Angaben in %) | | | | | | |
|---|---|---|---|---|---|---|
| Vernetzungsmittel | Temperatur (°C) | | | | | |
| | 130 | 140 | 150 | 160 | 170 | 180 |
| Bis (α,α-Dimethylbenzyl)-Peroxid(Dicumylperoxid) | 0 | 15 | 52 | 62 | 65 | 68 |
| 1,3-Di-(Tertbutylperoxid-isopropyl)-Benzol | 0 | 0 | 17 | 55 | 60 | 65 |
| Komplex aus Bis-(α,α-Dimethylbenzyl)- Peroxid (Dicumyl-Peroxid) mit Carbamid | 0 | 12 | 46 | 59 | 74 | 79 |

Um hoch belastbare Wicklungen zu erhalten ist es wichtig, daß die relative Dehnung der Isolierschicht nach der Vernetzungs-Wärmebehandlung und zusätzlicher thermischer Alterung bei einer Temperatur von 150 ± 5°C über zwei Stunden hinweg mindestens 90% beträgt.

### Beispiel 2

In Hochdruck-Polyäthylen mit den schon im Beispiel 1 angegebenen Eigenschaften werden im Diffusionsverfahren 2,4-Dichlorbenzolperoxid und 0,5 Gew.-% N,N'-Di-(Naphthyl-2)-Phenylendiamin eingebracht. Im übrigen wurde gemäß Beispiel 1 verfahren. Der Vernetzungsgrad der fertigen Isolierschicht beträgt für dieses Beispiel 62%. Die Isolierschicht zeichnet sich durch sehr feinporige Struktur aus.

### Beispiel 3

Dieses Beispiel entspricht Beispiel 1 mit der Maßgabe, daß als Antioxidans N-Nitroso-Diphenylamin (Diaphenam H) verwendet wird. Man erhält einen Vernetzungsgrad der Isolierschicht von mindestens 65%. Das Diaphenam H verbessert die Verarbeitbarkeit der aus der Polyäthylenmasse hergestellten Folie und gewährleistet eine noch höhere Haftung zwischen Isolierschicht und der Schutzschicht des Wicklungsdrahtes. Man erhält auch eine weiter verbesserte Beständigkeit gegen durch Thermo-Oxidation bedingte Schäden des vernetzten Polyäthylen.

Auf die oben beschriebene Weise wurden z.B. Wicklungen für Transformatoren mit einer Leistung bis 1 kW für eine Arbeitsfrequenz von 50 kHz hergestellt. Diese Wicklungen eignen sich für einen Einsatz unter erschwerten Betriebsbedingungen: Einsatztemperatur von -60°C bis 130°C; relative Luftfeuchte 98% bei einer Temperatur von 40°C über 21 Tage; Unterdruck bis 53600 Pa (400 Torr); mechanische Belastungen: mehrfache Stöße bis 400 m/s², einzelne Stöße bis 1500 m/s², lineare Beschleunigung bis 100 m/s², Vibrationen von 1 bis 500 Hz bei Beschleunigungen bis 100 m/s². Ihr Isolationswiderstand ist in normaler Umgebung mindestens 10⁹ Ohm, bei 120°C mindestens 10⁸ Ohm und in feuchter Umgebung 10⁷ bis 10⁹ Ohm.

Diese Transformatorwicklungen ließen sich ohne Hilfsmaterialien und komplizierte Werkzeuge herstellen. Das Herstellungsverfahren ist zuverlässig und sicher. Es gelingt bei ihm praktisch 100% des eingesetzten Isolierschichtmateriales in fester Phase in die Wicklung einzubringen, so daß praktisch abfallfrei und umweltfreundlich gearbeitet werden kann.

Vermutlich sind die besonders guten Eigenschaften der wie oben beschrieben hergestellten isolierten Wicklungen darauf zurückzuführen, daß beim Vernetzen des Polyäthylens der Kristallinitätsgrad und folglich auch der Anteil der amorphen Phase vermindert wird. Damit erhält man eine Verminderung und einen Abbau der Eigenspannungen sowohl bei der Wärmebehandlung des Wicklungsrohlings als auch später beim Betrieb der Wicklung. Die Widerstandsfähigkeit der Wicklung gegen Ablösen von Schichten und Rißbildung ist gegenüber herkömmlichen Wicklungen erhöht. Da das vernetzte Polyäthylen sehr gut an der Schutzschicht der elektrischen Leiter haftet, hat man sowohl ein hervorragendes mechanisches Festlegen der einzelnen Windungen als auch eine hermetische Abdichtung der Leiterdrähte. Dabei ist die Isolierschicht elastischer als bei mit Harzen getränkten Wicklungen, was die Lebensdauer erhöht. Da bei der Wärmebehandlung das Isolierschichtmaterial schmilzt, können sich in der Schutzschicht der Leiter und in der Leiterseele etwa noch vorhandene Spannungen abbauen, da sich der Leiter, der beim Wickeln der Spule in gewissem Umfange elastisch gedehnt wird, verkürzen kann.

Durch das oben beschriebene Herstellungsverfahren wird erreicht, daß die Zwischenräume zwischen den einzelnen Leitern vollständig ausgefüllt werden, wenn das Polyäthylenmaterial aufschäumt. Die durch dieses Aufschäumen erhaltene poröse Isolierschicht bildet beim Aufschäumen in einer Form zugleich auch definierte Stirnflächen der Wicklung und eine definierte Außenfläche, die keiner Nacharbeit bedarf.

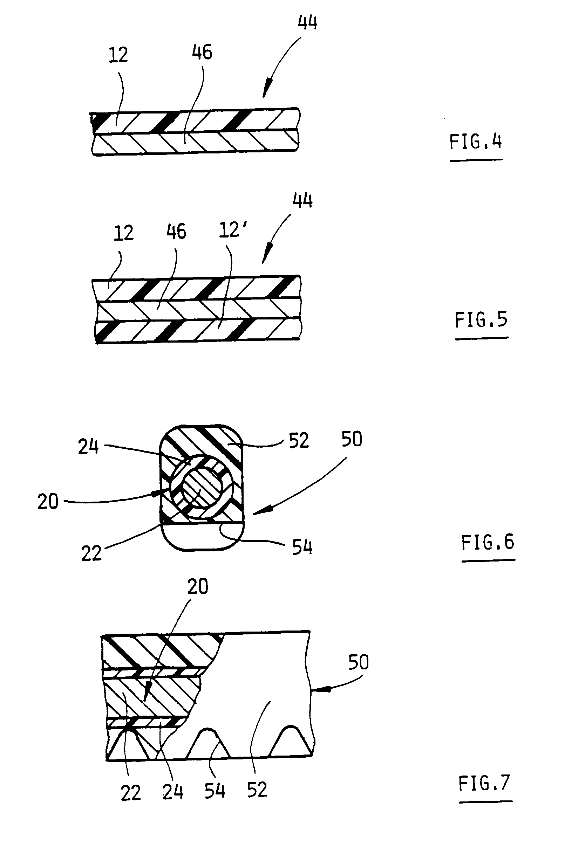

Anstelle des zur oben beschriebenen Wicklungsherstellung verwendeten Halbfabrikates, welches eine Polyäthylenfolie bzw. ein aus einer solchen hergestelltes Band war, kann man auch ein abgewandeltes Halbfabrikat 44 verwenden, wie es in Figur 4 gezeigt ist. Bei ihm ist eine nicht oder nur geringfügig vernetzte Polyäthylenschicht 12 auf ein Isolierpapier 46 aufkaschiert.

Ein weiter abgewandeltes Halbfabrikat 48 gemäß Figur 5 besteht aus einem zentralen Iolierpapier 44 und beidseitig aufkaschierten Polyäthylenschichten 12, 12'.

Die Halbfabrikate 44 und 48 lassen sich ähnlich einsetzen wie die oben beschriebenen Bänder 12 und 16.

Nicht zu dicht gewickelte Wicklungen lassen sich ausgehend von einem Halbfabrikat 50 gemäß Figuren 6 und 7 einfach durch Wickeln herstellen. Der Leiter 20 ist in eine Umhüllung 52 eingespritzt, die aus nicht oder nur geringfügig vernetztem Polyäthylenmaterial besteht. Die Umhüllung hat rechteckigen oder ovalen Querschnitt, um die Leiter 20 eng nebeneinander wickeln zu können. Das Biegen zu den einzelnen Windungen kann durch Einkerbungen 54 erleichtert werden, die zumindest bei der späteren Innenseite der Wicklung liegen. Nach dem Wickeln einer Spule aus dem Halbfakrikat 50 wird der Spulenrohling einfach einer Wärmebehandlung unterworfen, wobei die Umhüllung schmilzt, aufschäumt und vernetzt, wodurch die Leiter 20 mit einer monolithischen Isolierung umgeben werden.

Obwohl die Erfindung obenstehend bevorzugt in Verbindung mit isolierten Wicklungen beschrieben wurde, bei denen der elektrische Leiter eine Schutzschicht über der Seele aufwies, versteht es sich, daß man von der Erfindung auch zum Isolieren blanker Leiter Gebrauch machen kann, z.B. zum Isolieren gestanzter Leiter oder gedruckter Leiterbahnen.

## Patentansprüche

1. Elektrische Wicklung mit mindestens einer Leiterlage (14) aus mit einer isolierenden Schutzschicht (24) überzogenem Drahtmaterial (22) und mit einer die Leiterlagen (14) aufnehmenden Isolierschicht (30), dadurch gekennzeichnet, daß die Isolierschicht (30) durch ein Polyolefinmaterial, inbesondere Polyäthylenmaterial, mit einem Vernetzungsgrad von mindestens 60% gebildet ist, welches in situ vernetzt und mit der Leiterlage (14) verschmolzen ist.

2. Wicklung nach Anspruch 1, dadurch gekennzeichnet, daß das Polyolefinmaterial aufgeschäumt (42) ist.

3. Wicklung nach Anspruch 1 oder 2, dadurch gekennzeichnet, daß das Polyolefinmaterial etwa 0,3 bis etwa 0,5 Gew.-% eines Antioxidans enthält.

4. Wicklung nach Anspruch 3, dadurch gekennzeichnet, daß das Antioxidans eine Aminverbindung oder eine Carbamidverbindung umfaßt, die insbesondere aus der nachstehenden Gruppe ausgewählt ist: N-Nitroso-Diphenylamin; N,N'-Di-(Naphthyl-2)-Phenylendiamin-(1,4); Komplexe eines organischen Peroxids mit Carbamid; oder aus folgender Gruppe Stammt: 4,4'-Thio-Bis (6-Tertbutyl-3-Methylphenol) (Phenosan F); 2-(3,5-Di-Tertbutyl-4-Hydroxyphenyl-Propionylhydrazino) -5-(3,5-Di-Tertbutyl-4-Hydroxyphenyläthyl)-2,3-Dihydro1,2,3,4-Oxaphosphadiasol (Santonox® K).

5. Wicklung nach einem der Ansprüche 1-4, dadurch gekennzeichnet, daß über der Isolierschicht (30) eine Deckschicht (18) liegt, deren Erweichungspunkt bei einer Temperatur liegt, die deutlich über dem Erweichungspunkt des Polyolefinmateriales liegt, z.B. aus Polyäthylenterephthalat.

6. Verfahren zum Herstellen einer Wicklung nach einem der Ansprüche 1-5, bei welchem eine elektrisch leitende Seele (22) mit einer elektrisch isolierenden Schutzschicht (24) überzogen wird, aus dem so erhaltenen isolierten Leiter (20) mindestens eine Leiterlage (14) erzeugt wird, wobei der Leiterlage Isolierschichtmaterial auf Polyolefinbasis hinzugegeben wird, und die so erhaltene Anordnung einer Wärmebehandlung unterworfen wird, dadurch gekennzeichnet, daß die Seele (22) mit einer solchen Schutzschicht (24) überzogen wird, die eine verglichen mit dem Polyolefinmaterial hohe Temperaturbeständigkeit aufweist; daß als Isolierschichtmaterial ein nicht oder nur geringfügig bis maximal 15% vernetztes Polyolefinmaterial verwendet wird; und daß die Wärmebehandlung bei einer Temperatur erfolgt, die unter der Temperaturbeständigteitsgrenze der Leiterschutzschicht (24) liegt, und über eine solche Zeitspanne durchgeführt wird, daß der Vernetzungsgrad des Polyolefins mindestens 60% beträgt.

7. Verfahren nach Anspruch 6, dadurch gekennzeichnet, daß die Wärmebehandlung spätestens dann abgebrochen wird, wenn der Vernetzungsgrad des Polyolefins 95% beträgt.

8. Verfahren nach Anspruch 6 oder 7, dadurch gekennzeichnet, daß das nicht vernetzte Polyolefinmaterial durch Walzen oder Extrudieren zu einem Draht, Band oder einer Folie geformt wird, und Draht, Band oder Folie mit der Leiterlage (14) in Berührung gebracht wird.

9. Verfahren nach einem der Ansprüche 1-8, dadurch gekennzeichnet, daß der unvernetzten Polyolefinmasse ein Schäummittel zugesetzt wird.

10. Verfahren nach Anspruch 9, dadurch gekennzeichnet, daß das Schäummittel ein sich bei der Wärmebehandlung zersetzendes Peroxid ist, insbesondere ein organisches Peroxid, und mit etwa 0,5 bis etwa 2 Gew.-% in der unvernetzten Polyolefinmasse enthalten ist.

11. Verfahren nach Anspruch 10, dadurch gekennzeichnet, daß die organische Peroxidverbindung aus der nachstehenden Gruppe ausgewählt ist: Bis-(α,α-Dimethylbenzyl)Peroxid; 1,3-Di-(Tertbutylperoxiisopropyl)-Benzol 2,4-Dichlorbenzolperoxid; Komplex aus Bis-(α,α-Dimethylbenzol)Peroxid mit Carbamid im Verhältnis etwa 1:3 bis etwa 1:10, vorzugsweise etwa 1:5; Mischungen aus Tertbutyl-Monoperoxiden der Meta-Para-Diisopropylbenzole und des 1,1,3-Trimethylinphans (Monoperoxin).

12. Verfahren nach einem der Ansprüche 9-11, dadurch gekennzeichnet, daß zumindest ein Teil der Wärmebehandlung in einer Form durchgeführt wird, welche den durch Leiterlagen und Isolierschichtmaterial und gegebenenfalls Wikkelkern gebildeten Wicklungsrohling formschlüssig umgibt.

13. Verfahren nach einem der Ansprüche 7-12, dadurch gekennzeichnet, daß zumindest ein Teil der Wärmebehandlung unter gleichzeitiger Unterdruckbeaufschlagung erfolgt.

14. Halbfabrikat in Form einer Folie eines Bandes oder eines Drahtes zur Durchführung des Verfahrens nach einem der Ansprüche 6-13, dadurch gekennzeichnet, daß es aus nicht oder nur geringfügig bis maximal 15% vernetztem Polyolefinmaterial, vorzugsweise Polyäthylenmaterial, besteht.

15. Halbfabrikat nach Anspruch 14, dadurch gekennzeichnet, daß es aus Hochdruckpolyäthylen besteht.

16. Halbfabrikat nach Anspruch 14, dadurch gekennzeichnet, daß es aus einem Kopolymer aus Äthylen mit Vinylacetat besteht.

17. Halbfabrikat nach einem der Ansprüche 14 bis 16, dadurch gekennzeichnet, daß das Polyolefinmaterial (12) mit einem Isolierpapier (46) verbunden ist.

18. Halbfabrikat nach einem der Ansprüche 14 bis 16, dadurch gekennzeichnet, daß das Polyolefinmaterial als vorzugsweise ovalen oder rechteckigen Querschnitt aufweisende Umhüllung (52) an einen isolierten Leiter (20) angespritzt ist.

19. Halbfabrikat nach Anspruch 18, dadurch gekennzeichnet, daß die Umhüllung (52) mindestens längs einer Begrenzungsfläche mit Einkerbungen (54) versehen ist.

20. Halbfabrikat nach einem der Ansprüche 14 bis 19, dadurch gekennzeichnet, daß der Polyolefinmasse ein Schaummittel zugesetzt ist.

21. Halbfabrikat nach Anspruche 20, dadurch gekennzeichnet, daß das Schäummittel ein sich bei der Wärmebehandlung zersetzendes Peroxid ist, insbesondere ein organisches Peroxid, und mit etwa 0,5 bis etwa 2 Gew.-% in der unvernetzten Polyolefinmasse enthalten ist.

22. Halbfabrikat nach Anspruche 21, dadurch gekennzeichnet, daß die organische Peroxidverbindung aus der nachstehenden Gruppe ausgewählt ist: Bis-(α,α-Dimethylbenzyl)Peroxid; 1,3-Di-(Tertbutylperoxiisopropyl)-Benzol; 2,4-Dichlorbenzolperoxid; Komplex aus Bis-(α,α-Dimethylbenzol)Peroxid mit Carbamid im Verhältnis etwa 1:3 bis etwa 1:10, vorzugsweise etwa 1:5; Mischungen aus Tertbutyl-Monoperoxiden der Meta-Para-Diisopropylbenzole und des 1,1,3-Trimethylinphans (Monoperoxin).

23. Halbfabrikat nach einem der Ansprüche 14 bis 22, dadurch 5 gekennzeichnet, daß das Polyolefinmaterial etwa 0,3 bis etwa 0,5 Gew.-% eines Antioxidans enthält.

24. Halbfabrikat nach Anspruch 23, dadurch gekennzeichnet, daß das Antioxidans eine Aminverbindung oder eine Carbamidverbindung umfaßt, die insbesondere aus der nachstehenden Gruppe ausgewählt ist: N-Nitroso-Diphenylamin; N,N'-Di-(Naphthyl-2)-Phenylendiamin-(1,4); Komplexe eines organischen Peroxids mit Carbamid; oder aus folgender Gruppe Stammt: 4,4'-Thio-Bis(6-Tertbutyl-3-Methylphenol) (Phenosan F); 5 2-(3,5-Di-Tertbutyl-4-Hydroxyphenyl-Propionylhydrazino) -5-(3,5-Di-Tertbutyl-4-Hydroxyphenyläthyl)-2,3-Dihydro-1,2,3,4-Oxaphosphadiasol (Santonox® K).

## Claims

1. Electrical winding with at least one conductor layer (14) made from a wire material (22) covered with an insulating protective layer (24) and with an insulating layer (30) which receives the conducting layers (14), characterised in that the insulating layer (30) is formed by a polyolefin material, particularly polyethylene material with a degree of cross-linking of at least 60%, which is cross-linked in situ and fused with the conducting layer (14).

2. Winding according to Claim 1, characterised in that the polyolefin material (42) has been expanded.

3. Winding according to Claim 1 or 2, characterised in that the polyolefin material contains roughly 0.3 to roughly 0.5% by weight of an antioxidant.

4. Winding according to Claim 3, characterised in that the antioxidant includes an amine compound or a carbamide compound which is selected in particular from the following group : N-nitroso diphenylamine; N,N'-di-(naphthyl-2)-phenylenediamine-(1,4); complex of an organic peroxide with carbamide; or comes from the following group: 4,4'-thio-bis (6-tertbutyl-3-methylphenol) (Phenosan F); 2-(3,5-di-tertbutyl-4-hydroxyphenyl-propionylhydrazino)-5-(3,5-di-tertbutyl-4-hydroxyp henylethyl)-2,3-dihydro-1,2,3,4-oxaphosphadiasole (Santonox^{R}K).

5. Winding according to one of the Claims 1-4, characterised in that a covering layer (18) lies over the insulating layer (30) whose softening point is at temperature which lies significantly above the softening point of the polyolefin and is made from e.g. polyethylene terephthalate.

6. Process for the manufacture of a winding according to one of the Claims 1-5, in which an electrically conducting core (22) is covered by an electrically insulating protective layer (24) and out of the insulated conductor (20) thus obtained at least one conducting layer (14) is produced whereby a material forming an insulating layer based on a polyolefin is added to the conducting layer and the arrangement thus obtained is subjected to heat treatment, characterised in that the core (22) is covered with a protective layer (24) that has a high thermal stability when compared with the polyolefin material, and in that a polyolefin material is used as an insulating layer material that is not cross-liked or is only slightly cross-linked up to a maximum of 15%; and in that the heat treatment takes place at a temperature that lies below the thermal stability limit of the conductor protective layer (24) and is carried out over a time span such that the degree of cross-linking of the polyolefin is at least 60%.

7. Process according to Claim 6, characterised in that the heat treatment is discontinued at the latest when the degree of cross-linking amounts to 95%.

8. Process according to Claim 6 or 7, characterised in that the non-cross-linked polyolefin material is moulded by rolling or extrusion into a wire, strip or film and the wire, strip or film is brought into contact with the conducting layer (14).

9. Process according to one of the Claims 1-8, characterised in that a foaming agent is added to the non-cross-linked polyolefin mass.

10. Process according to Claim 9, characterised in that the foaming agent is a peroxide which decomposes during the heat treatment, in particular an organic peroxide, and is contained in the non-cross-linked polyolefin mass at a rate of roughly 0.5 to roughly 2% by weight.

11. Process according to Claim 10, characterised in that the organic peroxide compound is selected from the following group: bis-(α,α-dimethylbenzyl)-peroxide; 1,3-di-(tertbutylperoxiisopropyl)-benzene; 2,4-dichlorobenzyl peroxide; a complex of bis-( α,α-dimethylhenzyl)-peroxide with carbamide at a ratio of roughly 1:3 to roughly 1:10 and preferably roughly 1:5; mixtures of tertbutyl-monoperoxides of meta-para-diisopropylbenzene and of 1,1,3-trimethylinphane (Monoperoxin).

12. Process according to one of the Claims 9-11, characterised in that at least a part of the heat treatment is carried out in a mould which tightly surrounds the winding blank formed by conducting layers and insulating layer materials and possibly a bobbin core.

13. Process according to one of the Claims 7-12, characterised in that at least a part of the heat treatment takes place with the simultaneous application of a vacuum.

14. Semi-finished product in the form of a film, a strip or a wire for carrying out the process according to one of the Claims 6-13, characterised in that it consists of a polyolefin that is non-cross-linked or only slightly cross-linked up to a maximum of 15%, preferably a polyethylene material.

15. Semi-finished product according to Claim 14, characterised in that it consists of high pressure polyethylene.

16. Semi-finished product according to Claim 14, characterised in that it consists of a copolymer of ethylene and vinyl acetate.

17. Semi-finished product according to one of the Claims 14 to 16, characterised in that the polyolefin material (12) is joined to an insulating paper (46).

18. Semi-finished product according to one of the Claims 14 to 16, characterised in that the polyolefin material is sprayed onto an insulated conductor (20) as a sheathing (52) having a preferably oval or rectangular cross-section.

19. Semi-finished product according to Claim 18 characterised in that the sheathing (52) is provided with indentations (54) along at least one limiting surface.

20. Semi-finished product according to one of the Claims 14 to 19, characterised in that a foaming agent is added to the polyolefin mass.

21. Semi-finished product according to Claim 20, characterised in that the foaming agent is a peroxide which decomposes during the heat treatment, in particular an organic peroxide, and is contained at a rate of roughly 0.5% to roughly 2% by weight in the non-cross-linked polyolefin mass.

22. Semi-finished product according to Claim 21, characterised in that the organic peroxide compound is selected from the following group: bis-(α,α -dimethylbenzyl)-peroxide; 1,3-di-(tertbutylperoxiisopropyl)-benzene; 2,4-dichlorobenzyl peroxide; a complex of bis-(α,α-5-dimethylbenzyl)-peroxide with carbamide in a ratio or roughly 1:3 to roughly 1:10 and preferably roughly 1:5; mixtures of tertbutyl-monoperoxides of meta-para-diisopropylbenzene and of 1,1,3-trimethylinphane (Monoperoxin).

23. Semi-finished product according to one of the Claims 14 to 22, characterised in that the polyolefin material contains roughly 0.3 to 0.5% by weight of an antioxidant.

24. Semi-finished product according to Claim 23, characterised in that the antioxidant includes an amine compound or a carbamide compound which is selected in particular from the following group: N-nitroso diphenylamine; N,N'-di-(naphthyl-2)-phenylenediamine-(1,4), complex of an organic peroxide with carbamide; or comes from the following group: 4,4'-thio-bis (6-tertbutyl-3-methylphenol) (Phenosan F) ; 2-(3,5-di-tertbutyl-4-hydroxyphenyl-propionylhydrazino)-5-(3,5-di-tertbutyl-4-hydroxyp henylethyl)-2,3-dihydro-1,2,3,4-oxaphosphadiasole (Santonox^{R}K).

## Revendications

1. Enroulement électrique doté, au minimum, d'une couche de matériau conducteur (14) constituée par un matériau fait de fil métallique (22) recouvert par une couche de protection isolante (24) et qui présente une couche isolante (30) qui enrobe les couches de matériau conducteur (14), caractérisé en ce que la couche isolante (30) est constituée par un matériau polyoléfinique, en particulier, par un matériau à base de polyéthylène avec un degré de réticulation d'au moins 60 %, lequel est réticulé in situ et est fondu en même temps que la couche de matériau conducteur (14).

2. Enroulement selon la revendication 1, caractérisé en ce que le matériau polyoléfinique se trouve sous forme expansée (42).

3. Enroulement selon les revendications 1 ou 2, caractérisé en ce que le matériau polyoléfinique contient d'environ 0,3 à environ 0,5 % en poids d'une substance antioxydante.

4. Enroulement selon la revendication 3, caractérisé en ce que l'antioxydant contient un composé aminé ou un composé carbamide qui est, en particulier, choisi à partir du groupe mentionné ci-après : N-nitroso-diphénylamine; N,N'-di-(naphtyl-2)-phénylènediamine-(1,4); complexes d'un peroxyde organique et d'un carbamide; ou qui provient du groupe suivant : 4,4'-thio-bis(6-tertbutyl-3-méthylphénol) (Phénosan F); 2-(3,5)-di-tertbutyl-4-hydroxyphénylpropionylhydrazino)-5-(3,5-di-tertbutyl-4-hydroxyphényléthyl)-2,3-dihydro-1,2,3,4-oxaphosphadiazol (Santonox®K).

5. Enroulement selon l'une des revendications 1 à 4, caractérisé en ce qu'une couche de protection (18) repose sur la couche isolante (30), dont le point de ramollissement se situe à une température nettement au-dessus du point de ramollissement du matériau polyoléfinique et qui est, par exemple, constituée de polyéthylène-téréphtalate.

6. Procédé permettant la fabrication d'un enroulement selon l'une des revendications 1 à 5, dans lequel on recouvre une âme électriquement conductrice (22) d'une couche de protection électriquement isolante (24), dans lequel on réalise au moins une couche de matériau conducteur (14) à partir du matériau conducteur isolé (20) ainsi obtenu, à l'occasion de quoi on ajoute de la matière de couche isolante à base de polyoléfine sur la couche de matériau conducteur et à l'occasion de quoi, on soumet la structure ainsi obtenue à un traitement thermique, caractérisé en ce que l'âme (22) est recouverte par une telle couche de protection (24), qui présente une résistance à la température élevée comparée à celle du matériau à base de polyoléfine; en ce que l'on emploie un matériau à base de polyoléfine non réticulée ou seulement faiblement réticulée jusqu'à, au maximum, 15 %, comme matière de couche isolante; et en ce que l'on réalise le traitement thermique à une température située sous la limite de résistance à la température de la couche de protection du conducteur (24), et en ce que l'on réalise le traitement thermique dans un intervalle de temps tel que le degré de réticulation de la polyoléfine est d'au moins 60 %.

7. Procédé selon la revendication 6, caractérisé en ce que l'on interrompt le traitement thermique au plus tard lorsque le degré de réticulation de la polyoléfine atteint 95 %.

8. Procédé selon les revendications 6 ou 7, caractérisé en ce que le matériau polyoléfinique non-réticulé est mis en forme par laminage ou extrusion de façon à obtenir un fil, un ruban ou une feuille et en ce que on met en contact ce fil, ce ruban ou cette feuille avec la couche de matériau conducteur (14).

9. Procédé selon l'une des revendications 1 à 8, caractérisé en ce que l'on ajoute un agent moussant dans la masse de polyoléfine non-réticulée.

10. Procédé selon la revendication 9, caractérisé en ce que l'agent moussant est un peroxyde qui se décompose pendant le traitement thermique, en particulier, un peroxyde organique, et est contenu à raison d'environ 0,5 à environ 2 % en poids dans la masse de polyoléfine non-réticulée.

11. Procédé selon la revendication 10, caractérisé en ce que l'on choisit le composé peroxyde organique à partir du groupe mentionné ci-après : peroxyde de bis-α,α-diméthylbenzène; 1,3-di-(tertbutylperoxyisopropyl)-benzène; peroxyde de 2,4-dichlorobenzène; complexe du peroxyde de bis-α,α-diméthylbenzène et de l'urée selon des proportions allant d'environ 1 : 3 à environ 1 : 10, de préférence, environ 1 : 5; mélanges constitués de monoperoxydes de tertbutyle du méta-para-diisopropylbenzène et du 1,1,3-triméthylinphane (Monopéroxine).

12. Procédé selon l'une des revendications 9 à 11, caractérisé en ce que l'on réalise au moins une partie du traitement thermique à l'intérieur de la matrice d'un moule qui entoure mécaniquement l'élément de départ de l'enroulement constitué par les couches de matériau conducteur et par le matériau de base des couches isolantes et, le cas échéant, par le noyau de l'enroulement.

13. Procédé selon l'une des revendications 7 à 12, caractérisé en ce que l'on réalise au moins une partie du traitement thermique pendant l'injection sous pression.

14. Demi-produit se présentant sous l'apparence d'une feuille, d'un ruban ou d'un fil permettant la réalisation du procédé selon l'une des revendications 6 à 13, caractérisé en ce qu'il se compose de matériau polyoléfinique non-réticulé ou seulement faiblement réticulé, au maximum jusqu'à 15 % et en ce qu'il se compose, de préférence, de matériau à base de polyéthylène.

15. Demi-produit selon la revendication 14, caractérisé en ce qu'il se compose de polyéthylène haute-pression.

16. Demi-produit selon la revendication 14, caractérisé en ce qu'il se compose d'un copolymère d'éthylène et d'acétate de vinyle.

17. Demi-produit selon l'une des revendications 14 à 16, caractérisé en ce que le matériau polyoléfinique (12) est lié à un papier isolant (46).

18. Demi-produit selon l'une des revendications 14 à 16, caractérisé en ce que le matériau polyoléfinique est projeté sur la surface d'un conducteur (20) isolé, de façon à constituer une gaine (52) qui présente, de préférence, une section ovale ou rectangulaire.

19. Demi-produit selon la revendication 18, caractérisé en ce que la gaine (52) est pourvue d'encoches (54), au moins sur la longueur d'une des surfaces périphériques.

20. Demi-produit selon l'une des revendications 14 à 19, caractérisé en ce que la masse de matériau polyoléfinique est additionnée d'un agent moussant.

21. Demi-produit selon la revendication 20, caractérisé en ce que l'agent moussant est un peroxyde qui se décompose pendant le traitement thermique, en particulier, un peroxyde organique, et en ce qu'il est contenu dans la masse du matériau polyoléfinique non-réticulée à raison d'environ 0,5 à environ 2 % en poids.

22. Demi-produit selon la revendication 21, caractérisé en ce que l'on choisit le composé peroxyde organique à partir du groupe mentionné ci-après : peroxyde de bis-α,α-diméthylbenzène; 1,3-di-(tertbutylperoxyisopropyl)-benzène; peroxyde de 2,4-dichlorobenzène; complexe du peroxyde de bis-α,α-diméthylbenzène et de l'urée selon des proportions allant d'environ 1 : 3 à environ 1 : 10, de préférence, environ 1 : 5; mélanges constitués de monoperoxydes de tertbutyle du méta-para-diisopropylbenzène et du 1,1,3-triméthylinphane (Monopéroxine).

23. Demi-produit selon l'une des revendications 14 à 22, caractérisé en ce que le matériau polyoléfinique contient un antioxydant à raison d'environ 0,3 à 0,5 % en poids.

24. Demi-produit selon la revendication 23, caractérisé en ce que l'antioxydant contient un composé aminé ou un composé carbamide, lequel est choisi, en particulier, à partir du groupe mentionné ci-après : N-nitroso-diphénylamine; N,N'-di-(naphtyl-2)-phénylènediamine-(1,4); complexes d'un peroxyde organique et d'un carbamide; ou qui provient du groupe suivant : 4,4'-thio-bis(6-tertbutyl-3-méthylphénol) (Phénosan F); 2-(3,5)-di-tertbutyl-4-hydroxyphénylpropionylhydrazino)-5-(3,5-di-tertbutyl-4-hydroxyphényléthyl)-2,3-dihydro-1,2,3,4-oxaphosphadiazol (Santonox®K).
